(19) Europäisches Patentamt
European Patent Office
Office européen des brevets

(11) EP 0 824 111 A1

(12) **DEMANDE DE BREVET EUROPEEN**

(43) Date de publication:
**18.02.1998 Bulletin 1998/08**

(51) Int Cl.[6]: **C08F 4/00**

(21) Numéro de dépôt: **97401440.9**

(22) Date de dépôt: **20.06.1997**

(84) Etats contractants désignés:
**AT BE CH DE DK ES FI FR GB GR IE IT LI LU MC NL PT SE**
Etats d'extension désignés:
**AL LT LV RO SI**

(30) Priorité: **12.08.1996 FR 9610125**

(71) Demandeur: **ELF ATOCHEM S.A.**
**92800 Puteaux (FR)**

(72) Inventeurs:
- **Senninger, Thierry**
  **57700 Hayange (FR)**
- **Plechot, Muriel**
  **Quartier Castétarbe, 64300 Orthez (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(54) **Procédé de polymérisation ou copolymérisation radicalaire contrôlée de monomères (méth)acryliques et vinyliques et (co)polymères obtenus**

(57) Ce procédé est caractérisé par le fait que l'on polymérise ou copolymérise en masse, solution, émulsion ou suspension, à une température pouvant descendre jusqu'à 0°C, au moins un desdits monomères en présence d'un système d'amorçage comprenant au moins un composé générateur de radicaux autre qu'un chlorure d'arène sulfonyle ; et au moins un catalyseur constitué par un complexe de métal représenté par la formule suivante (I) : $MA_a(L)_n$ dans laquelle : M représente Ni, Pd ou Pt ; A représente un halogène ou un pseudo-halogénure ; les L sont des ligands du métal M, choisis indépendamment parmi ceux contenant au moins l'un parmi N, P, As, Sb, Bi, au moins deux de ces ligands pouvant être reliés entre eux par un ou plusieurs radicaux bivalents ; a est un entier de 1 à 5 ; n est un entier de 1 à 4 ; avec $4 \leq a + n \leq 6$, a + n représentant le nombre de coordination du complexe.



Printed by Jouve, 75001 PARIS (FR)

## Description

La présente invention est relative à un procédé de polymérisation ou copolymérisation radicalaire contrôlée de monomères (méth)acryliques et/ou vinyliques (par exemple, vinylaromatiques), ainsi qu'aux polymères ou copolymères ainsi obtenus.

La polymérisation radicalaire constitue l'un des processus de polymérisation les plus exploités industriellement en raison de la variété des monomères polymérisables, de la facilité de mise en oeuvre et des procédés de synthèse employés (masse, émulsion, solution, suspension). Il est toutefois difficile en polymérisation radicalaire classique de contrôler la dimension des chaînes polymères ainsi que la distribution des masses moléculaires. Les matériaux constitués de ces macromolécules ne possèdent donc pas de propriétés physico-chimiques contrôlées. De plus, la polymérisation radicalaire classique ne permet pas de conduire à des copolymères séquencés.

Les polymérisations ioniques ou coordinatives permettent, quant à elles, de contrôler le processus d'addition du monomère, mais elles nécessitent des conditions soignées de polymérisation, notamment une pureté marquée du monomère et des réactifs, ainsi qu'une atmosphère inerte.

L'objectif est de pouvoir réaliser des polymérisations radicalaires qui contrôlent mieux les divers paramètres énoncés ci-dessus et qui puissent conduire à des copolymères séquencés.

Le concept utilisé pour contrôler la polymérisation fait appel aux réactions d'oxydo-réduction par transfert d'atomes ou de groupes d'atomes de façon réversible. Le complexe métallique oscille entre deux degrés d'oxydation en permanence au cours de la polymérisation. Ce concept a été largement exploité en chimie organique et a été découvert par Kharasch en 1947 avec l'addition de polyhalogénométhanes sur des oléfines.

Les systèmes suivants ont été employés avec succès pour contrôler la polymérisation :

- $RuCl_2(PPh_3)_3$ en présence d'un dérivé de l'aluminium : ce type de système, impliquant un dérivé de l'aluminium, est sensible à l'oxygène et à l'humidité.
- CuCl/bipyridine : les systèmes au cuivre travaillent à des températures élevées, par exemple au-delà de 100°C pour le styrène. Avec la bipyridine comme ligand, le complexe n'est pas soluble dans le monomère. Il est nécessaire pour réaliser la solubilisation d'utiliser des bipyridines substituées, telles que la dinonylbipyridine.

Pour l'instant peu d'articles font référence aux complexes du nickel pour contrôler la polymérisation radicalaire. On peut cependant citer :

- les complexes de Van Koten qui sont des complexes organométalliques du nickel (possédant donc une liaison métal-carbone) ; ils présentent l'inconvénient que leur préparation est longue et passe par plusieurs étapes de synthèse, notamment celle du ligand de départ ; de plus, ils sont sensibles à l'oxygène et doivent donc être employés dans des conditions anaérobies.
- du nickel réduit au degré d'oxydation (0) a été utilisé en présence d'halogénures d'alkyle (Otsu, T. *Chem. Express* 1990, *5*, 801 ou Otsu, T. *J. Macromol. Sci. Chem.* 1969, *3*, 177), pour polymériser de façon vivante le méthacrylate de méthyle, mais des distributions bimodales sont obtenues. De même, du nickel métallique activé peut servir d'amorceur en présence d'halogénure d'alkyle (Otsu, T. *J. Polym. Sci., Polym. Lett.* 1967, *5*, 697 ou Otsu, T. *J. Polym. Sci. Part A1,* 1970, *8*, 785), pour polymériser le méthacrylate de méthyle, mais aucun caractère vivant n'est mentionné.

D'autres complexes du nickel au degré (0) comme $Ni\{P(OR)_3\}_4$ (Hargreaves, K. *J. Polym. Sci. Polym. Chem.* 1988, *26*, 465) ou $Ni[CO]_4$ (Bamford, C. H. *Trans. Farad. Soc.* 1970, *66*, 2598) ont été testés en présence d'halogénures d'alkyle comme initiateurs de monomères vinyliques, mais il n'est pas fait mention de caractère vivant.

Les complexes du type $NiX_2(PPh_3)_2$ ont été utilisés pour réaliser l'addition de Kharasch (Inoue, Y. *Chem. Lett.* 1978, 367) mais non pour réaliser la polymérisation radicalaire contrôlée. Percec et al. dans *Macromolécules* 1996, *29*, 3665-3668 citent ces complexes pour réaliser l'addition de Kharasch, et mentionnent qu'avec les chlorures d'arène sulfonyle, la polymérisation du styrène n'est pas contrôlée. Il n'est pas fait mention du bon contrôle (et donc du caractère vivant) de la polymérisation avec ce complexe et un générateur de radicaux, notamment un halogénure d'alkyle tel que $CBrCl_3$.

L'objectif de la présente invention est atteint par un procédé de polymérisation ou copolymérisation radicalaire contrôlée de monomères (méth)acryliques et/ou vinyliques, caractérisé par le fait que l'on polymérise ou copolymérise en masse, solution, émulsion ou suspension à une température pouvant descendre jusqu'à 0°C, au moins un desdits monomères en présence d'un système d'amorçage comprenant :

- au moins un composé générateur de radicaux autre qu'un chlorure d'arène sulfonyle ; et
- au moins un catalyseur constitué par un complexe de métal représenté par la formule suivante (I) :

$$MA_a(L)_n \qquad (I)$$

dans laquelle :

- M représente Ni, Pd ou Pt ;
- A représente un halogène ou un pseudo-halogénure ;
- les L sont des ligands du métal M, choisis indépendamment parmi ceux contenant au moins l'un parmi N, P, As, Sb, Bi, au moins deux de ces ligands pouvant être reliés entre eux par un ou plusieurs radicaux bivalents ;
- a est un entier de 1 à 5 ;
- n est un entier de 1 à 4 ;

avec $4 \leq a + n \leq 6$, a + n représentant le nombre de coordination du complexe.

M représente de préférence Ni.

A représente un halogène choisi notamment parmi Cl, Br, F et I, ou un pseudo-halogénure choisi notamment parmi CN, NCS, $NO_2$ et $N_3$.

La géométrie du complexe de formule (I) peut être octaédrique, tétraédrique, pyramidale à base carrée ou plan carrée. Les présents complexes sont donc tels que $4 \leq a+n \leq 6$, de préférence, égal à 4.

Les radicaux bivalents qui peuvent relier les ligands L peuvent être, par exemple, un radical alkylène, tel que les radicaux méthylène ($-CH_2-$), éthylène ($-CH_2CH_2-$), triméthylène ($-CH_2CH_2CH_2-$), lesquels peuvent eux-mêmes être substitués par exemple par un groupe alkyle en $C_1$-$C_{14}$ ou aryle.

Les ligands peuvent être choisis indépendamment parmi les phosphines, les arsines, les stibines, les phosphites, les ligands azotés et les ligands mixtes comportant à la fois du phosphore et de l'arsenic, du phosphore et de l'azote, tous ces ligands pouvant comporter au moins un hétéroélément tel que O et S.

Un ligand phosphine peut être une monophosphine PRR'R", R, R' et R" représentant chacun indépendamment un groupe alkyle en $C_1$-$C_{14}$ pouvant être substitué par $SO_3^-$, COOH, alcoxy, alkyl-S-, ou un groupe aromatique pouvant être substitué par au moins un substituant choisi notamment parmi halogène, tel que Cl, Br, F, alkyle, $CF_3$, alcoxy, $NO_2$, $SO_3^-$, au moins l'un parmi R, R' et R" pouvant être un halogène tel que Cl, Br ou représenter H, et au moins deux de ces ligands pouvant être reliés par au moins un radical bivalent pour former une polyphosphine, laquelle peut contenir au moins un hétéroatome, tel que N, P, S et O.

Comme exemples de groupes alkyle éventuellement substitués entrant dans la définition de R, R', R", on peut citer méthyle, éthyle, n-propyle, n-butyle, $NCCH_2CH_2$-, et comme exemples de groupes aromatiques, éventuellement substitués, on peut citer phényle, 1-naphtyle, p-$FC_6H_4$, m-$ClC_6H_4$, o-$CH_3OC_6H_4$, p-$CF_3C_6H_4$, 2,4,6-triméthoxyphényle, $C_6F_5$, o-$CH_3C_6H_4$, p-$CH_3C_6H_4$, m-$CH_3C_6H_4$.

On peut également citer les monophosphines porteuses de groupements destinés à les rendre solubles, telles que le triphénylphosphine monosulfonate de sodium (TPPMS) ou le triphénylphosphine trisulfonate de sodium (TPPTS) :

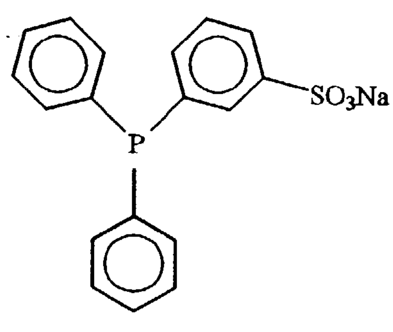

TPPMS

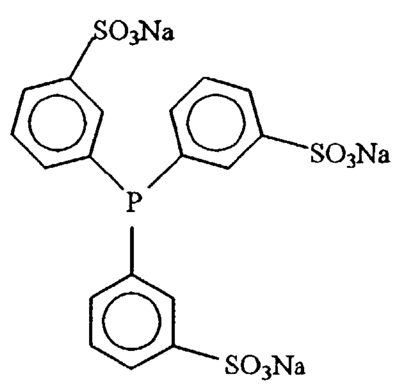

TPPTS

et les monophosphines chirales, telles que la (S)-(+)-néomenthyldiphénylphosphine ((S)-NMDPP) (CAS Number = 43077-29-8).

On peut également citer O-SMe-$C_6H_4$-P-$Ph_2$ ainsi que O-SMe-$C_6H_4$ -PPh-$C_6H_4$-O-SMe.

Comme polyphosphines, on peut mentionner les composés de la formule générale suivante :

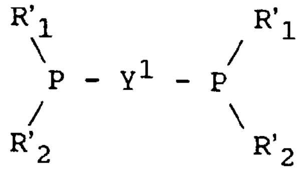

dans laquelle :

- $R'_1$ et $R'_2$ représentent chacun indépendamment alkyle, alkyle substitué, alkyle portant une fonction -COOH ou -$NH_2$, aryle, aryle substitué, tel que $C_6H_5$ ;
- $Y^1$ représente :
  - alkylène ; alkylène substitué ;
  - arylène ; arylène substitué ;
  - binaphtyle ;
  - 1,2-cyclopentyle ;
  - $-(CR'_3R'_4)_n-Z-(CR'_5R'_6)_m-$, avec $R'_3$ à $R'_6$ représentant chacun indépendamment H ou alkyle ; n et m représentant chacun un nombre entier de 0 à 3; et et

Z = 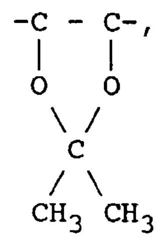

pyridile ou phénylène ;
  - $-[(CR'_7R'_8)_p-T]_q-(CR'_9R'_{10})_r$, avec $R'_7$ à $R'_{10}$ représentant chacun indépendamment H ou alkyle ; p, q et r représentant un nombre entier de 1 à 5, et T = -O- ; -S- ; $-NR'_{11}-$ ; $-PR'_{12}$ ($R'_{11}$, $R'_{12}$ = alkyle en $C_1$-$C_{14}$, aryle) ;
  - 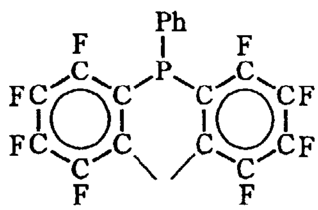 ;

et
  - $-C_6H_5-CH=CH-C_6H_5-$.

On peut citer en particulier :

- les diphosphines telles que, par exemple :
  - $Me_2PCH_2CH_2PMe_2$
  - $Ph_2PCH_2PPh_2$
  - $Ph_2PCH_2CH_2PPh_2$
  - $Ph_2P(CH_2)_nPPh_2$, n = 3 à 14
  - $(C_6F_5)_2PCH_2CH_2P(C_6F_5)_2$
  - les diphosphines chirales capables d'apporter une stéréospécificité à la polymérisation, comme :

- le (4R,5R)-(-)-O-isopropylidène-2,3-dihydroxy-1,4-bis(diphénylphosphino)butane ((R,R)-DIOP) (CAS Number = 37002-48-5) ;
- le (4S,5S-(+)-O-isopropylidène-2,3-dihydroxy-1,4-bis(diphénylphosphino)butane ((S,S)-DIOP) ;
- le (R)-(+)-2,2'-bis(diphénylphosphino)-1,1'-binaphtyl ((R)-BINAP) (CAS Number = 76189-55-4) ;
- le (S)-(-)-2,2'-bis(diphénylphosphino)-1,1'-binaphtyl ((S)-BINAP) (CAS Number 76189-56-5);
- le (2S,3S)-(-)-bis(diphénylphosphino)butane ((S,S)-CHIRAPHOS) (CAS Number = 648976-28-2);
- le (2S,4S)-(-)-2,4-bis(diphénylphosphino)-pentane ((S,S)-BDPP) (CAS Number = 77876-39-2) ;
- le R-(+)-1,2-bis(diphénylphosphino)propane ((R)-PROPHOS) (CAS Number = 67884-32-6), ...
- les diphosphines représentées par les formules :

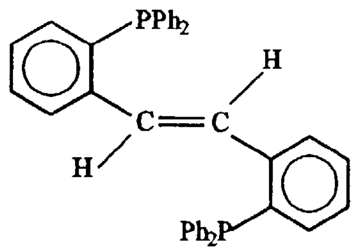
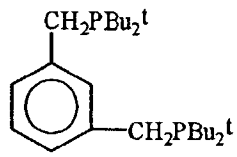
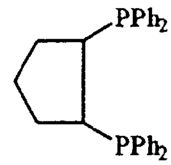

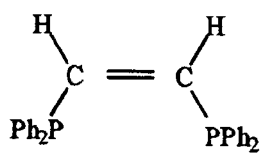
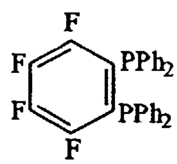
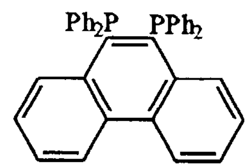

- les diphosphines contenant des hétéroatomes, comme par exemple :

  - $Ph_2PCH_2CH_2OCH_2CH_2PPh_2$ ;
  - $Ph_2PCH_2CH_2OCH_2CH_2OCH_2CH_2PPh_2$ ;
  - $Ph(CH_2COOH)PCH_2CH_2P(CH_2COOH)Ph$
  - $Ph_2P(CH_2)_nS(CH_2)_mS(CH_2)_pPPh_2$ (n, m et p représentant chacun indépendamment 2 ou 3)
  - les diphosphines de formule :

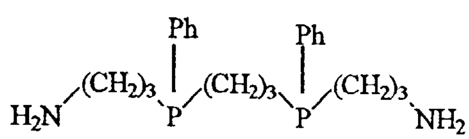
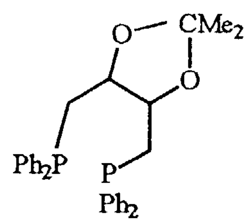
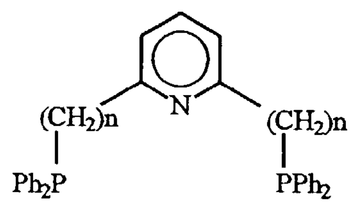

- les triphosphines, comme celles des formules :

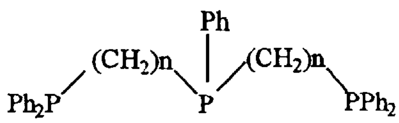

n = 2, 3

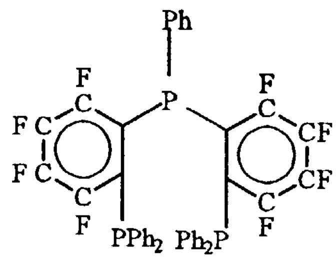

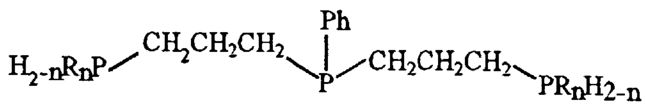

R = Me, Ph
n = 0, 1, 2

avec $PPh_2$ pouvant être remplacé par PPhMe ou $PMe_2$.

On peut également citer :

- les arsines telles que :
  - $MePhAsC_2H_4AsPhMe$
  - $MePhAsC_3H_6AsPhMe$
  - cis-$Me_2AsC_2H_2AsMe_2$
  - trans-$Me_2AsC_2H_2AsMe_2$

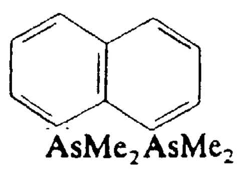

- les stibines telles que $Me_2SbCH_2CH_2CH_2SbMe_2$ ;
- les ligands mixtes tels que :

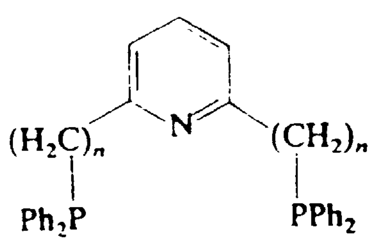

n = 1, 2.

Les ligands comprenant à la fois P et As peuvent être :

- $Ph_2PCH_2CH_2AsPh_2$

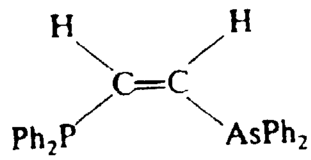

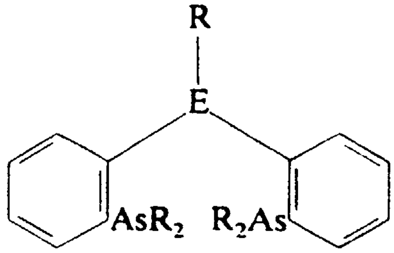

E = As; R = Ph
E = P; R = Ph
E = As; R = Me

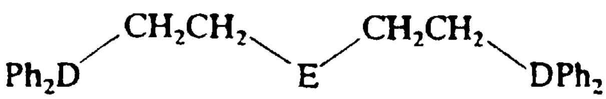

E = O; D = As
E = S; D = As
E = O; D = P
E = S; D = P

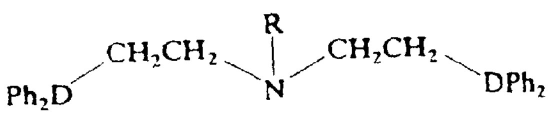

R = H; D = As
R = H, Me, Ph, Cy; D = P

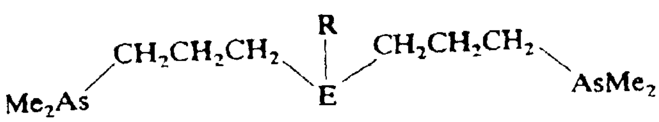

ER = AsMe
ER = PPh
ER = AsPh
ER = $AsCH_2CH_2Cl$

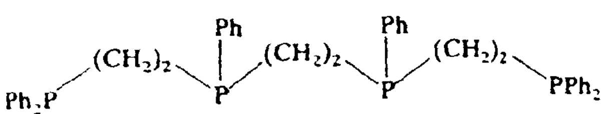

$p_4$

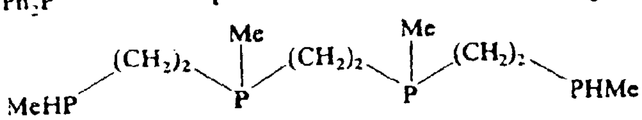

$Me_4p_4$

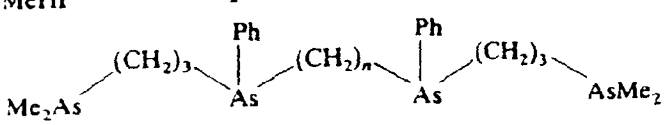

$n$ = 3, 3,3,3-tetars
$n$ = 2, 3,2,3-tetars

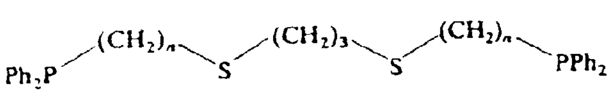

$n$ = 3, 3,3,3-$p_2s_2$
$n$ = 2, 2,3,2-$p_2s_2$

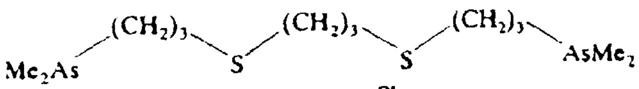

3,3,3-$as_2s_2$

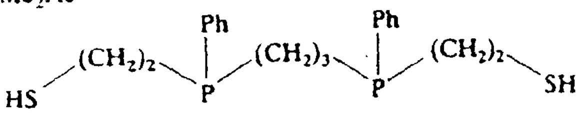

2,3,2-$H_2s_2p_2$

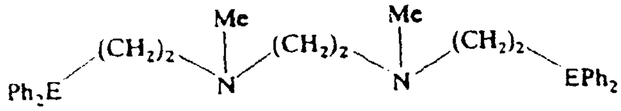

E = P, $p_2n_2$
E = As, $as_2n_2$

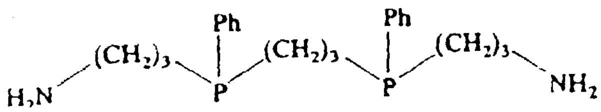

3,3,3-$n_2p_2$

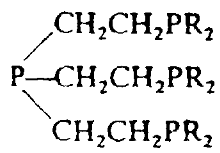

R = Ph
R = $CH_2CMe_3$

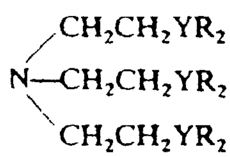

$YR_2 = PPh_2$
$YR_2 = AsPh_2$
$YR_2 = PMe_2$
$YR_2 = AsMe_2$
$YR_2 = PEt_2$
$YR_2 = PCy_2$

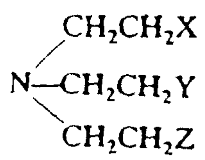

$X = Y = PPh_2$; $Z = NEt_2$
$X = Y = AsPh_2$; $Z = NEt_2$
$X = Y = NEt_2$; $Z = PPh_2$
$X = Y = NEt_2$; $Z = AsPh_2$
$X = Y = AsPh_2$; $Z = OMe$
$X = CH_2OMe$; $Y = Z = PPh_2$
$X = OMe$; $Y = Z = PPh_2$

On peut également citer les ligands azotés, tels que les bases de Schiff présentant une liaison C=N, comme :

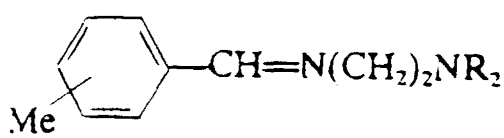

ou deux liaisons C=N, comme :

$$R_1\text{-C=N-}(CR_2R_3)_n\text{-N=C-}R_4$$

avec :

- $R_1$ à $R_4$ choisis chacun parmi alkyle et aryle ; et
- n = 1 à 10,
  par exemple

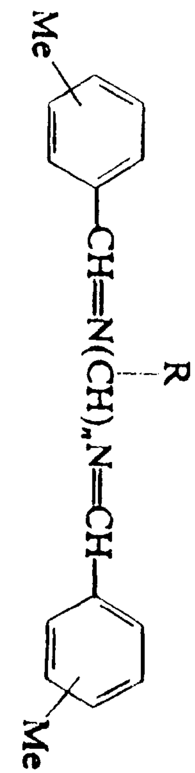

On peut également citer les complexes formés par des bases de Schiff tridentates :

| Ligands | Complexe | Nombre de Coordination |
|---|---|---|
| 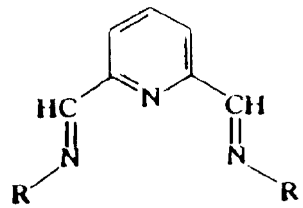 R = Me pdai<br>R = $NH_2$ pdah | $[Ni(pdai)_2]I_2 \cdot H_2O$<br>$[Ni(pdah)_2]I_2$ | 6<br>6 |
| 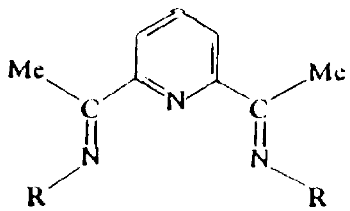 | $[Ni(dapiR_2)X_2]$<br>R = Me, Et, $Pr^n$, $Pr^i$, $Bu^s$, Cy; X = Cl, Br<br>R = $Bu^s$, Cy, Ph ; X = $NO_3$ , NCS<br>$[Ni(daphR)_2]X_2$<br>R = $NH_2$; X = Cl, I<br>R = NHMe; X = I, $ClO_4$<br>R = $NMe_2$; X = $ClO_4$<br>R = NHPh; X = $ClO_4$<br>$[Ni(daphR)Cl_2]$<br>R = NHMe, NHPh<br>R = $NMe_2$ | <br>5<br>6<br><br>6<br>6<br>6<br>6<br><br>5<br>5 |
| 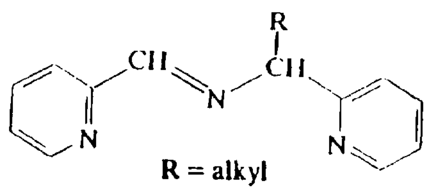 R = alkyl | $NiL_2(ClO_4)_2$<br>$NiL'_2$ (L' = ligand déprotoné)<br>$NiLX_2$<br>X = Cl, NCS<br>X = Br, I | 6<br>6<br><br>6<br>5 |
| 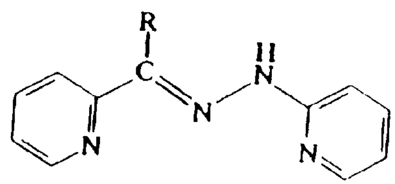 R = alkyl | $NiL_2(ClO_4)_2$<br>$NiL'_2$ (L' = ligand déprotoné) | 6<br>6 |

ainsi que les ligands suivants :

| Ligands | | Complexe | Nombre de Coordination |
|---|---|---|---|
| 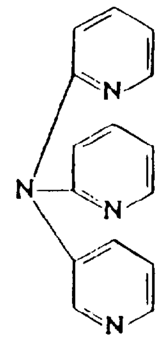 | | $[Ni(tpa)_2](ClO_4)_2$ | $N_6$ |
| 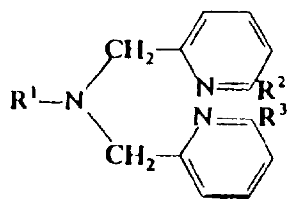 | $R^1 = R^2 = R^3 = H$<br>$R^1 = Me, R^2 = R^3 = H$<br>$R^1 = H, R^2 = R^3 = Me$<br>$R^1 = R^2 = R^3 = Me$ | $[NiL_2]X_2$<br>X = halogénures<br>$NiX_2L$<br>X = halogénures | $N_6$<br>$N_3X_2$ |
| 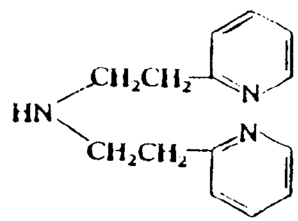 | | $NiX_2L$<br>X = halogénures<br>$Ni(NCS)_2L$ | $N_3X_2$ |
| 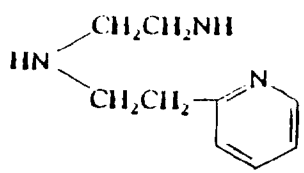 | | $NiX_2L$<br>X = halogénures, NCS, $NO_3$<br>$NiX_2L_2$<br>X = I, $ClO_4$ | $N_3X_3$<br>$N_6$ |

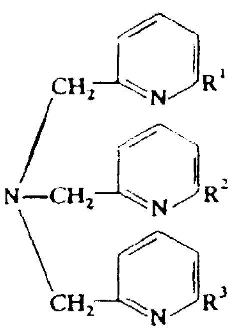

$R^1 = R^2 = R^3 = H$ tpma
$R^1 = H, R^2 = R^3 = Me$ dmetpma
$R^1 = R^2 = R^3 = Me$ tmetpma

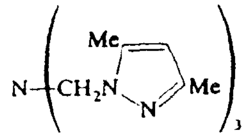

metpyma

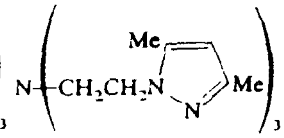

metpyea

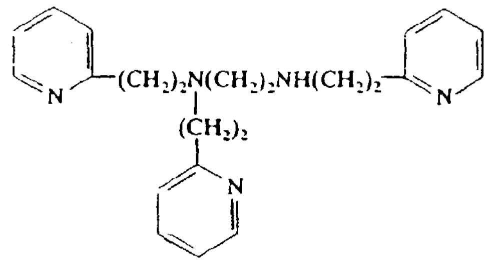

tpen

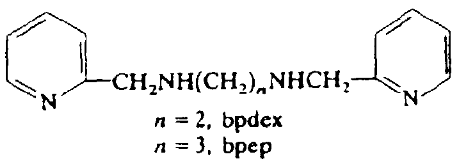

$n = 2$, bpdex
$n = 3$, bpep

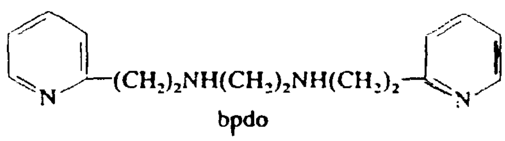

bpdo

On peut également mentionner les composés de formule :

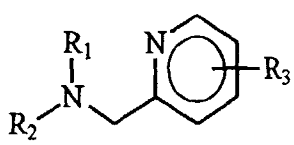

dans laquelle :

- soit $R_1$ représente :

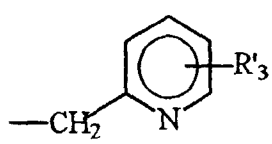

$R_2$ représentant alors le radical :

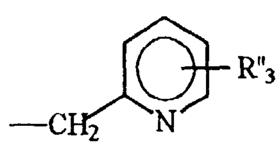

$R_3$, $R'_3$ et $R''_3$ représentant chacun indépendamment H, alkyle en $C_1$-$C_4$, alcoxy en $C_1$-$C_4$, halogène,

- soit $R_1$ représente :

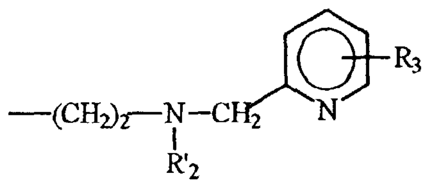

$R_2$ et $R'_2$ étant alors identiques et représentant un groupe choisi parmi hydrogène, alkyle inférieur en $C_1$-$C_4$, alcoxy en $C_1$-$C_4$, halogène.

Les ligands peuvent également être choisis dans la famille des phosphites P(OR) (OR') (OR"), avec par exemple R, R' et R" choisis indépendamment parmi n-butyle, isopropyle, éthyle, méthyle, $(CH_3)_3CCH_2$-, $C_6H_4$.

Les ligands, tels que les phosphines, peuvent être greffés sur un support minéral ou organique ; par exemple, la triphénylphosphine peut être greffée sur un copolymère styrène - divinylbenzène.

A titre d'exemple de composés (I), on peut citer $NiX_2(PPh_3)_2$, et

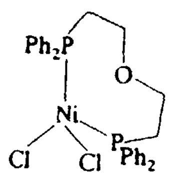

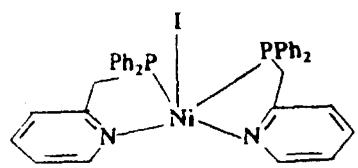

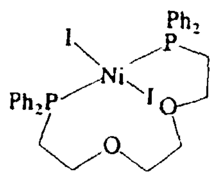

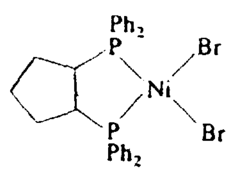

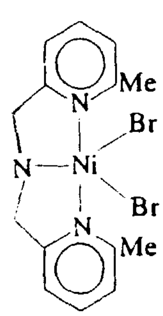

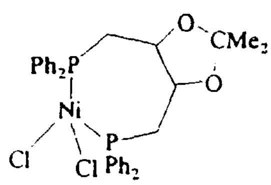

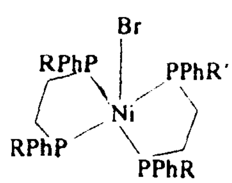

$R = CH_2CO_2H$
$R' = CH_2CO_2$

$NiX_2(PPh_3)_2$ est un complexe particulièrement préféré car il n'est pas sensible à l'eau ou à l'oxygène et ne demande donc pas de conditions drastiques de polymérisation, telles que celles employées par exemple avec des catalyseurs de type Ziegler-Natta. De plus, ces produits sont simples, peu chers et facilement disponibles sur le marché. La préparation du complexe est simple à réaliser et ne nécessite que la mise en commun de deux réactifs : sel de Ni et phosphine (Acta Chem Scand. 1949, 3, 474). La préparation est encore plus simple lorsque la phosphine n'est pas pyrophorique, comme c'est le cas avec la triphénylphosphine.

Le complexe de formule (I) peut par ailleurs porter une charge cationique, le rendant plus apte à coordiner les

monomères, surtout les monomères polaires. Cette charge cationique peut être apportée par extraction d'un ligand halogéno, par exemple à l'aide de $AgBPh_4$, de $AgBF_4$, de $TlBF_4$ ou de $TlBPh_4$ ou encore de $AgB(C_6F_5)_4$ ou de $AgCF_3SO_3$.

Le catalyseur ne jouant pas le rôle de générateur de radicaux, il est donc indispensable de lui associer un tel composé. La réaction entre le générateur de radicaux et l'espèce de métal M décrite ci-avant donne lieu à une polymérisation contrôlée. On pourra ainsi poursuivre une polymérisation en ajoutant une nouvelle dose d'un monomère, éventuellement différent du premier. Si ce monomère est différent du premier, et qu'il est ajouté après épuisement du premier (ou jusqu'à une conversion élevée de l'ordre de 80-100%, de préférence 95%), on obtiendra un copolymère séquencé. S'il est ajouté en même temps que le premier, la copolymérisation sera aléatoire et on obtiendra un copolymère statistique. Pour la préparation de copolymères séquencés, on peut envisager l'utilisation d'un mélange de deux ou plusieurs catalyseurs, la seconde dose de monomère étant additionnée en présence d'un catalyseur différent mais toujours du type tel que défini dans le cadre de la présente invention, ce catalyseur devant alors être plus actif que celui déjà présent. C'est ainsi que l'on peut répéter cette opération à chaque nouvelle séquence que l'on veut préparer.

Suivant l'invention, des composés générateurs de radicaux qui conviennent particulièrement bien sont des composés halogénés activés par des effets électroniques donneurs et/ou récepteurs sur l'atome de carbone en position a du ou des halogènes dudit composé, notamment ceux indiqués ci-après :

Lorsque le générateur de radicaux est monofonctionnel, il peut être choisi dans les classes des composés suivants :

(a) les dérivés de formule :

$$CYZ_3$$

où :

- Y = Cl, Br, I, F, H ou $-CR^1R^2OH$, $R^1$ et $R^2$ représentant chacun indépendamment hydrogène ou alkyle en $C_1$-$C_{14}$ ; et
- Z = Cl ou Br,

par exemple, le tétrachlorure de carbone, le chloroforme, le tétrabromure de carbone, le bromotrichlorométhane, le 2,2,2-tribromoéthanol ;

(b) les dérivés de formule :

$$R^3CCl_3$$

où $R^3$ représente un groupe phényle ; benzyle ; benzoyle ; alcoxycarbonyle ; $R^4CO$ avec $R^4$ représentant alkyle en $C_1$-$C_{14}$ ou aryle ; alkyle ; mésityle ; trifluorométhyle ; ou nitro,
comme, par exemple, l'α,α,α-trichlorotoluène, l'α,α,α-trichloroacétophénone, le trichloroacétate d'éthyle, le 1,1,1-trichloroéthane, le 1,1,1-trichloro-2-phényléthane, le trichlorométhylmésitylène, le 1,1,1-trichloro-2,2,2-trifluoroéthane et le trichloronitrométhane ;

(c) les dérivés de formule :

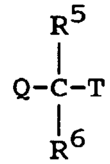

dans laquelle :

- Q représente un atome de chlore ou de brome ou un groupe acétate

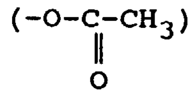

ou trifluoroacétate

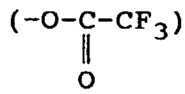

ou triflate ($O_3SCF_3$) ;

- $R^5$ représente un atome d'hydrogène, un groupe alkyle en $C_1$-$C_{14}$ ou un groupe aromatique, par exemple du type benzénique, anthracénique ou naphtalénique, ou un groupe -$CH_2OH$ ;
- T représente un groupe

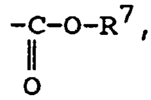

avec $R^7$ représentant chacun hydrogène ou un groupe alkyle ou aromatique ; un groupe CN ; un groupe

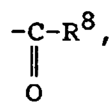

avec $R^8$ représentant alkyle en $C_1$-$C_{14}$, phényle ou isocyanate ; un groupe hydroxyle ; un groupe nitro ; un groupe amino substitué ou non ; un groupe alcoxy en $C_1$-$C_{14}$ ; un groupe $R^9CO$, avec $R^9$ représentant alkyle en $C_1$-$C_{14}$ ou aryle ;

- $R^6$ représente un groupe entrant dans les définitions de $R^5$ ou de Q ou un groupe fonctionnel tel qu'hydroxyle, nitro, amino substitué ou non, alcoxy en $C_1$-$C_{14}$, acyle, acide carboxylique, ester ;

comme, par exemple, l'acide 2-bromopropionique, l'acide 2-bromobutanoique, l'acide 2-bromohexanoique, le 2-bromo 2-méthyl propionate d'éthyle, le bromoacétonitrile, le 2-bromopropionitrile, la 2-bromoisobutyrophénone et le chloroacétylisocyanate ; le 2-bromo-2-nitro-1,3-propanediol et le 2-bromo-2-nitropropane ;

(d) les composés lactones ou lactames halogénés en $\alpha$, comme l'$\alpha$-bromo-$\alpha$-méthyl-$\gamma$-butyrolactone ou $\alpha$-bromo-$\gamma$-valérolactone, le lauryllactame halogéné ou le caprolactame halogéné ;

(e) les N-halosuccinimides, comme le N-bromosuccinimide, et les N-halophtalimides, comme le N-bromophtalimide ;

(f) les halogénures (chlorures et bromures) d'alkylsulfonyle, le reste alkyle étant notamment en $C_1$-$C_{14}$ ;

(g) les composés de formule :

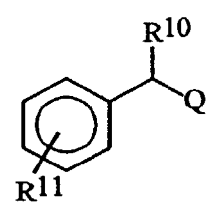

où :

- $R^{10}$ représente un atome d'hydrogène, un groupe alkyle en $C_1$-$C_{14}$ ou un groupe acide carboxylique, ester, nitrile ou cétone ;
- $R^{11}$ représente un atome d'hydrogène ou un groupe alkyle en $C_1$-$C_{14}$, hydroxyle, acyle, amine substituée ou non, nitro, alcoxy en $C_1$-$C_{14}$ ou sulfonate ($SO_3^-Na^+$ ou $K^+$) ; et
- Q a la signification donnée précédemment ;

(h) les composés de formule :

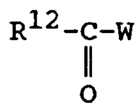

où :

- $R^{12}$ représente alkyle en $C_1$-$C_{14}$ ou aryle ; et
- W représente un halogène, préférentiellement Cl et Br, ou un pseudohalogénure tel que $N_3$, SCN ;

(i) les composés de formule :

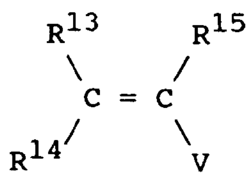

où :

- $R^{13}$, $R^{14}$ et $R^{15}$ représentent chacun indépendamment alkyle en $C_1$-$C_{14}$ ou aryle ; et
- V représente un halogène, tel que préférentiellement Cl, Br, ou également un groupement acétate, trifluoroacétate, triflate ; et

(j) les halogénures aromatiques de formule :

Ar - U

où :

- Ar représente un groupement aromatique tel que $C_6H_5$- pouvant être substitué en position méta, ortho ou para par un groupement électroattracteur, tel que $NO_2$, $NO_3$, $SO_3$, ou électrodonneur, tel qu'un groupement alkyle ou un groupement -ONa ; et
- U représente un halogène, tel que préférentiellement Cl ou Br.

On peut également envisager l'utilisation de générateurs de radicaux bifonctionnels et de fonctionnalité supérieure ; les générateurs de radicaux bifonctionnels peuvent être constitués de deux générateurs de radicaux monofonctionnels $A^1$ et $A^2$ issus des classes (c) à (j) précitées, reliés par une chaîne d'unités méthylène ou par un cycle benzénique ou par une combinaison des deux, tels que représentés par les formules :
$A^1$-$(CH_2)_p$-$A^2$ avec p entier de 1 à 14,

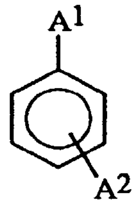

et

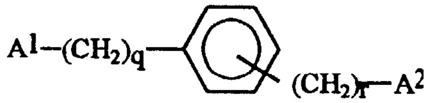

avec q et r représentant chacun indépendamment un entier de 1 à 14.

Dans le cas où $A^1$ et $A^2$ sont issus de la classe (c), on peut présenter les générateurs de radicaux bifonctionnels sous la formule :

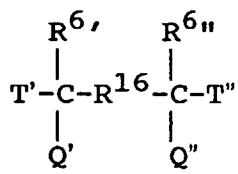

dans laquelle :

- T' et T" représentent chacun indépendamment un groupe entrant dans la définition de T ;
- Q' et Q" représentent chacun indépendamment un groupe entrant dans la définition de Q ;
- $R^{6'}$ et $R^{6''}$ représentent chacun indépendamment un groupe entrant dans la définition de $R^6$ ; et
- $R^{16}$ représente un groupe $-(CH_2)_p-$,

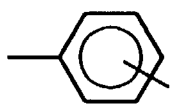

,

ou

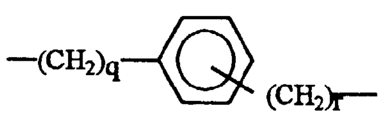

tels que définis ci-dessus.

On peut par exemple citer les amorceurs bifonctionnels des formules :

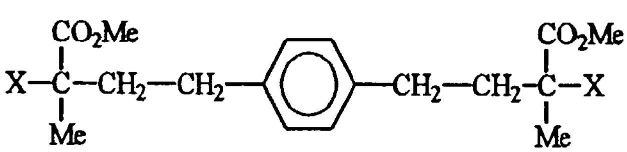

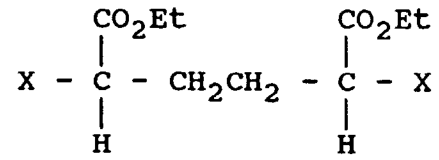

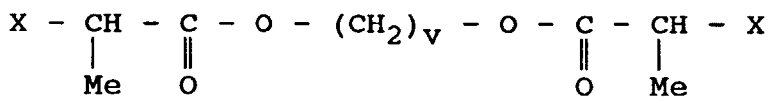

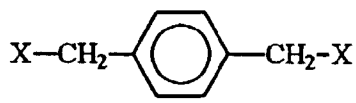

avec X = halogène, tel que Br et Cl ; et v = entier de 1 à 10.

L'emploi d'un amorceur bifonctionnel permet la préparation de copolymères triséquencés de type A(b)B(b)A, en synthétisant d'abord le bloc central difonctionnel, qui sert à amorcer la polymérisation du monomère A.

Les composés générateurs de radicaux multifonctionnels peuvent être constitués d'au moins trois groupements générateurs de radicaux monofonctionnels $A^1$, $A^2$ et $A^3$ issus des classes (c) à (j) précitées reliés entre eux par un cycle benzénique, comme, par exemple, ceux répondant à la formule :

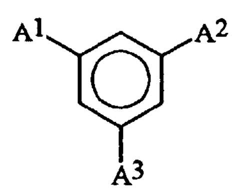

D'autres composés générateurs de radicaux bifonctionnels sont les tri- ou tétrahalométhanes et les dérivés trichlorométhylés des classes (a) et (b) précitées, ces mêmes tri- et tétrahalométhanes pouvant également servir de composés générateurs de radicaux multifonctionnels.

On pourrait également utiliser d'autres composés générateurs de radicaux difonctionnels que ceux représentés ci-dessus, notamment ceux de la famille des anhydrides acétiques comme l'anhydride d'acide chloroacétique et l'anhydride d'acide chlorodifluoroacétique.

Les générateurs de radicaux peuvent également, conformément à un mode de réalisation particulier de la présente invention, être les polylactones, comme les polycaprolactones, par exemple des poly(ε-caprolactones), porteuses d'un atome d'halogène, tel que le brome, à l'une des extrémités de chaîne, car ayant été obtenues par polymérisation par ouverture de cycle avec des alcoolates ou des carboxylates porteurs d'atomes d'halogène. Ainsi, on pourra utiliser par exemple un alcool halogéné, par exemple le tribromoéthanol (Exemple 13) ayant réagi au préalable avec un abstracteur de protons, tel que, par exemple, un tri-alkylaluminium (triméthylaluminium, triéthylaluminium, tri-isopropyl aluminium) ou un alcoolate d'aluminium (triéthoxylate d'aluminium). Les carboxylates halogénés peuvent aussi servir à amorcer la polymérisation des lactones comme cela est enseigné dans *Comprehensive Polymer Science,* Volume 3, Pergamon Press, 1ère édition, 1989, page 463. Les lactones peuvent être, par exemple, l'ε-caprolactone, la β-propiolactone ou l'α,α'-bis(chlorométhyl)-β-propiolactone.

L'utilisation de telles polylactones, activées par un catalyseur selon l'invention, permet de préparer de polymères séquencés particuliers, comme illustré par l'Exemple 13 ci-après.

La longueur des chaînes polymères étant préalablement déterminée par le rapport molaire du ou des monomères (méth)acryliques ou vinyliques sur le ou les composés générateurs de radicaux, ce rapport est de 1 - 100 000, avantageusement de 50 à 2 000. Quant au rapport molaire du métal M sur le (ou les) générateur(s) de radicaux, il est

généralement compris entre 0,01 et 100, avantageusement entre 0,1 et 20.

Le paramètre de la température de polymérisation ou de copolymérisation est un point extrêmement important qui distingue le procédé de l'invention des procédés utilisant des systèmes catalytiques actuellement connus. Avec les procédés catalytiques connus, il se produit une inactivité du catalyseur en dessous d'une température qui se situe autour de 100°C en l'absence d'activateur. C'est ainsi qu'à 50°C, il ne se produit pas de polymérisation avec le catalyseur CuCl/2,2-bipyridine et, en l'absence d'activateur, avec le catalyseur $RuCl_2(PPh_3)_3$, et cela même après plusieurs jours de réaction. On peut parler, dans le cadre de la présente invention, de conditions réactionnelles douces car il est très peu courant que des catalyseurs en synthèse restent actifs à des températures pouvant descendre jusqu'à 0°C à la pression atmosphérique. Cet avantage est extrêmement important d'autant plus que le stéréocontrôle de la réaction de polymérisation ou copolymérisation est favorisé par un abaissement de la température. D'autre part, les conditions réactionnelles en masse (c'est-à-dire dans le ou les monomères purs) et en solution, émulsion ou suspension sont d'une manière générale identiques. La température et tous les rapports molaires peuvent être les mêmes quel que soit le procédé de réaction utilisé. La possibilité de travailler, sans risques, dans le monomère pur constitue bien entendu une amélioration au regard des polymérisations radicalaires classiques. La concentration en centres actifs étant constante tout au long de la réaction de polymérisation ou copolymérisation en raison de l'absence de réactions de terminaison, l'exothermie importante et brutale (ou effet Trommsdorf) des polymérisations radicalaires classiques ne se produit pas. Pour le procédé industriel, ceci constitue bien entendu un progrès important puisque les polymérisations ou copolymérisations menées dans ces conditions ne risquent plus de devenir totalement incontrôlées. D'une manière générale, la polymérisation ou copolymérisation sera effectuée à une température de 0°C à 130°C, avantageusement entre 40 et 90°C sans aucune perte d'activité du catalyseur.

Les systèmes d'amorçage selon l'invention étant compatibles avec l'eau, on pourra donc effectuer les réactions de polymérisation ou copolymérisation en milieu aqueux, en présence ou non d'émulsifiants. C'est ainsi que les polymérisations en milieu aqueux sont effectuées soit en suspension (composé générateur de radicaux insoluble dans l'eau) soit en émulsion (composé générateur de radicaux soluble dans l'eau) en présence d'émulsifiants. Les émulsifiants peuvent être des surfactants anioniques, tels que le dodécylbenzène sulfonate de sodium, le dodécyl sulfate de sodium, le lauryl sulfate de sodium et leurs mélanges ou du type neutre comme les esters de glycol, les esters de sorbitane et de polyéthylène glycol tels que le monolaurate, le monopalmitate, oléate et stéarate de sorbitane et de polyéthylène glycol, les esters d'acides gras et de polyéthylène glycol tels que le stéarate de polyéthylène glycol et les éthers d'alcool gras et de polyéthylène glycol tels que les éthers stéarylique et cétylique de polyéthylène glycol.

Les réactions de polymérisation ou copolymérisation de l'invention, lorsqu'elles sont menées en solution, peuvent bien entendu également se faire en présence d'un solvant organique ou d'un mélange de solvants organiques appartenant aux familles de solvants suivantes :

- les hydrocarbures aromatiques (apolaires aprotiques) : benzène, toluène, éthylbenzène, xylène ;
- les hydrocarbures chlorés (polaires aprotiques) : chlorure de méthylène, chlorobenzène ;
- les éthers, tels que le diphényl éther ;
- les éthers cycliques (polaires aprotiques) : tétrahydrofuranne, dioxane ;
- les esters (polaires) : acétate d'éthyle, acétate de cyclohexyle ;
- les cétones (polaires) : méthyl éthyl cétone, cyclohexanone.

Un solvant chloré pourra être utilisé s'il n'interagit pas ou très peu avec le composé (I) de façon à ne pas donner de radicaux parasites.

Les solvants organiques précités conviennent particulièrement bien lorsque les monomères à polymériser ou copolymériser sont des monomères acryliques (méthacrylates, acrylates, l'acrylonitrile) et vinylaromatiques tels que styréniques.

Dans certains cas, notamment dans la polymérisation du méthacrylate de n-butyle et du styrène, on pourra utiliser l'hexane et le cyclohexane et dans la polymérisation de l'acétate de vinyle et de l'acrylonitrile, on pourra utiliser le diméthylformamide, le diméthylsulfoxyde, l'acétonitrile ou l'acétone.

D'une manière générale, le procédé de polymérisation et de copolymérisation suivant l'invention se déroule d'une manière identique pour l'homopolymérisation et la copolymérisation statistique. Pour la préparation de copolymères séquencés y compris les copolymères séquencés en étoile, les conditions expérimentales peuvent changer lors de l'addition d'un monomère différent du premier après la polymérisation du premier monomère. Par exemple, on peut faire varier la température dans un sens ou dans l'autre, la seconde dose pouvant être ajoutée avec un solvant. Pour la préparation de macromonomères ou de polymères $\alpha,\omega$ fonctionnalisés (téléchéliques), on pourrait envisager le même type de variation de conditions expérimentales.

Comme monomères polymérisables et copolymérisables en présence du système d'amorçage de polymérisation ou copolymérisation proposé, on peut citer les monomères (méth)acryliques et vinyliques (vinylaromatiques, esters vinyliques comme acétate de vinyle ; chlorure de vinyle).

Le système d'amorçage selon l'invention convient aussi pour la (co)polymérisation de monomères oléfiniques, éventuellement fluorés, comme l'éthylène, le butène, l'hexène, le 1-octène. Il convient aussi pour la (co)polymérisation de monomères à doubles liaisons conjuguées, tels que butadiène et isoprène.

Par monomère acrylique au sens de la présente invention, on entend un monomère choisi parmi les acrylates d'alkyle primaire, secondaire ou tertiaire, dont le groupe alkyle, le cas échéant substitué par exemple par au moins un atome d'halogène, tel que fluor, et/ou au moins un groupe hydroxyle, contient 1 à 18 atomes de carbone, en mentionnant plus particulièrement l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle, l'acrylate d'isodécyle, ainsi que l'acrylate de phényle, l'acrylate d'isobornyle, les acrylates d'alkylthioalkyle ou d'alcoxyalkyle, l'acrylonitrile et les dialkylacrylamides.

Par monomère méthacrylique au sens de la présente invention, on entend un monomère choisi parmi les méthacrylates d'alkyle dont le groupe alkyle, le cas échéant substitué, par exemple par au moins un atome d'halogène comme le fluor et/ou au moins un groupe hydroxyle, contient 1 à 18 atomes de carbone, comme les méthacrylates de méthyle, d'éthyle, de 2,2,2-trifluoroéthyle, de n-propyle, disopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, de β-hydroxy-éthyle, d'hydroxypropyle, d'hydroxybutyle, ainsi que le méthacrylate de glycidyle, le méthacrylate de norbornyle, le méthacrylonitrile et les dialkylméthacrylamides.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène,le dichloro-2,4-styrène, le dichloro-2,6-styrène et le vinyl-1-naphtalène.

Suivant l'invention, il a été constaté que, par une combinaison judicieuse d'un complexe de métal tel que défini précédemment, et d'un composé générateur de radicaux de polymérisation, on peut arriver à obtenir des homopolymères et des copolymères séquencés et statistiques parfaitement définis et contrôlés ainsi que des copolymères étoilés et des macromonomères et des polymères $\alpha,\omega$ fonctionnalisés (téléchéliques) qui n'ont jusqu'ici pu être synthétisé avec les procédés de polymérisation radicalaire classiques.

L'invention concerne donc également les polymères ou copolymères tels qu'obtenus par le procédé précité, de masses moléculaires contrôlées et de polymolécularité étroite.

Les polymères et copolymères de monomères (méth)acryliques, vinyliques tels qu'obtenus par le procédé de l'invention présentent des masses moléculaires $\overline{Mn}$ se situant entre 400 et 10 000 000 g/mole et une polymolécularité $\overline{Mw}/\overline{Mn}$ particulièrement étroite, inférieure à 2, généralement inférieure à 1,5, étant comprise entre 1,05 et 1,5. Dans le cadre de la polymérisation radicalaire, ceci constitue un progrès important puisqu'il y a encore peu de temps, il était impensable d'obtenir des distributions de masses moléculaires ou polymolécularités $\overline{Mw}/\overline{Mn}$ inférieures à 1,5. De plus, le procédé de l'invention est extrêmement régiosélectif, c'est-à-dire qu'il permet un excellent contrôle sur l'orientation des unités monomères lors de la propagation. D'autre part, les enchaînements s'orientent exclusivement tête à queue et non plus tête à tête comme cela pouvait être le cas en polymérisation radicalaire classique. Cela favorise la stabilité thermique des polymères et copolymères ainsi préparés. L'absence de réactions de terminaison élimine toute autre possibilité d'enchaînement tête à tête.

En comparaison avec les procédés de polymérisation et de copolymérisation radicalaires et ioniques connus, le procédé de la présente invention présente les avantages suivants :

- polymérisation homogène et vivante. La polymérisation est vivante selon les critères généralement avancés : évolution linéaire des masses moyennes en fonction de la conversion, évolution linéaire de ln(1/(1-conversion)) en fonction du temps, reprise de la polymérisation après ajout d'une nouvelle dose de monomère (Penczek, S. dans *Makromol. Chem. Rapid. Commun.* 1991, *12*, 77) ;
- excellent contrôle moléculaire : $\overline{Mw}/\overline{Mn}$ étroit jusqu'à environ $\overline{Mw}/\overline{Mn}$ = 1,1 ; bonne corrélation entre le $\overline{Mn}$ théorique et le $\overline{Mn}$ expérimental ; possibilité de préparation de copolymères séquencés y compris ceux en étoile ;
- polymérisation quantitative entraînant une consommation totale du monomère ;
- conditions de température douces allant de 0°C à 130°C et pression ordinaire ;
- le temps de réaction dépend de la concentration du milieu réactionnel. En effet, plus la concentration en monomère est faible, plus la cinétique de polymérisation sera lente. En milieu concentré ([monomère]> 6 mole $1^{-1}$), la polymérisation peut être terminée en moins de deux heures. En milieu plus dilué, les polymérisations sont généralement arrêtées après 24 heures de réaction ;
- compatibilité en milieux aqueux car les catalyseurs utilisés ne se dégradent pas en présence d'eau. Possibilité de polymérisation en émulsion et suspension, en présence ou non d'émulsifiants, l'utilisation de phosphines solubles telles que, par exemple, $((Na^{+-}O_3SC_6H_4)_3P)$ permettant de solubiliser le complexe dans la phase aqueuse ;
- possibilité de stéréocontrôle, c'est-à-dire du contrôle de la tacticité hétéro, syndio ou isotactique, en utilisant des

catalyseurs chiraux ;

- excellent contrôle de la synthèse des polymères ou copolymères obtenus dont les masses moléculaires varient entre 400 et 10 000 000 g/mole ;
- la résistance à la dégradation thermique des polymères et copolymères est améliorés en raison de l'absence de réactions de terminaison (combinaisons et disproportions), pouvant être montrée notamment par analyse thermogravimétrique ;
- obtention de nouveaux produits difficilement accessibles par les techniques de polymérisation usuelles, tels que copolymères séquencés purs, copolymères statistiques définis et polymères hyperbranchés utilisables comme adhésifs de formulation contrôlée, additifs antichocs, agents émulsifiants, agents interfaciaux ;
- obtention de matériaux à propriétés améliorées ; l'absence de doubles liaisons terminales permet d'augmenter la température de dépolymérisation des polymères, notamment du PMMA ;
- polymérisation contrôlée qui permet d'éviter l'autoaccélération de la polymérisation (appelée effet de gel ou effet Trommsdorf). Le contrôle de la polymérisation par le complexe du nickel permet d'éviter l'autoaccélération subite de la polymérisation avec prise en masse très rapide (voir exemple comparatif 6). Ce phénomène est en général néfaste pour l'industriel et le produit. En particulier, pour le PMMA devant se présenter sous forme de plaques coulées, il est important que la polymérisation soit contrôlée afin d'éviter l'apparition de bulles, ou de défauts à la surface de la plaque. On peut parvenir à éviter le point de gel à l'aide de cycles, parfois longs, de températures adaptés. Une seule température est préférentiellement utilisée, ce qui est une simplification pour le procédé.

On donne ci-après des exemples non limitatifs décrivant la préparation de polymères tels qu'obtenus suivant le procédé de la présente invention.

Les valeurs $\overline{Mn}_{exp}$ et $\overline{Mw}/\overline{Mn}$ sont obtenues de la façon suivante. On effectue une chromatographie d'exclusion stérique (SEC) qui permet de séparer les macromolécules de polymère suivant leur taille en solution (volume hydrodynamique). Elles sont alors éluées par un solvant (phase mobile de THF) du polymère. Les plus grosses molécules sortent en premier et les plus petites en dernier en raison du parcours plus long dans les pores de la colonne (phase stationnaire). Des PMMA de masses absolues connues (déterminées par une autre technique) sont également injectées (étalons) et permettent d'obtenir une courbe d'étalonnage à partir de laquelle on détermine les masses moléculaires relatives ($\overline{Mn}_{exp}$) du polymère dont on veut connaître la taille et la distribution des masses ou polydispersité ($\overline{Mw}/\overline{Mn}$).

Exemple 1

Polymérisation du méthacrylate de méthyle (MMA)

Dans un tube à essai, muni d'un bouchon à vis et d'un joint en Téflon, on introduit à la température ambiante et sous atmosphère inerte, 30,0 g de MMA, 0,15 g de bromotrichlorométhane (7,5 x $10^{-4}$ mole) et 0,563 g (7,5 x $10^{-4}$ mole) de complexe de nickel $NiBr_2(PPh_3)_2$. Le tube est placé dans un bain d'huile maintenu à 70°C et est agité par un mouvement de va-et-vient. Au bout de 1197 minutes, le tube est sorti du bain d'huile. Le polymère est récupéré après avoir cassé le tube.

| | |
|---|---|
| Conversion | 100% |
| $\overline{Mn}_{exp}$ | 26 750 g/mole (étalon de PMMA) |
| $\overline{Mn}_{théo}$ | 40 000 g/mole |
| $\overline{Mw}/\overline{Mn}$ | 1,6 |

Exemple 2

Polymérisation de l'acrylate de n-butyle

On procède comme pour l'Exemple 1 mais à une température de 130°C avec 30,0 g d'acrylate de n-butyle, 0,150 g (7,5 x $10^{-4}$ mole) de bromotrichlorométhane et 0,563 g (7,5 x $10^{-4}$ mole) de complexe de nickel $NiBr_2$ $(PPh_3)_2$. La polymérisation est arrêtée au bout de 1185 min.

| | |
|---|---|
| Conversion | 100% |
| $\overline{Mn}_{exp}$ | 26 750 g/mole (étalon de PMMA) |

(suite)

| | |
|---|---|
| $\overline{Mn}_{théo}$ | 31 520 g/mole |
| $\overline{Mw}/\overline{Mn}$ | 1,9 |

Exemple 3 (comparatif)

On procède comme pour l'Exemple 1, mais on amorce la polymérisation du MMA par de l'$\alpha,\alpha'$-azobisisobutyronitrile (AIBN - CAS = 78-67-1). On mélange 30,0 g de MMA et 0,0615 g d'AIBN (3,7 x $10^{-4}$ mole). La polymérisation est arrêtée au bout de 120 min.

| | |
|---|---|
| Conversion | 100% |
| $\overline{Mn}_{exp}$ | 99 780 g/mole (étalon de PMMA) |
| $\overline{Mn}_{théo}$ | 40 000 g/mole |
| $\overline{Mw}/\overline{Mn}$ | 9,9 |

Exemple 4

Polymérisation du MMA

Dans un réacteur en acier inoxydable, de 2 l, équipé d'un agitateur à ancre et d'une régulation de température, on introduit, à 70°C et sous atmosphère d'azote, une solution préparée à température ambiante et sous atmosphère inerte et contenant 300,0 g de MMA. 1,50 g de bromotrichlorométhane (7,5 x $10^{-3}$ mole) et 5,63 g de $NiBr_2(PPh_3)_2$ (7,5 x $10^{-3}$ mole). L'instant auquel le mélange atteint la température de 70°C est défini comme l'instant de départ de l'essai. On procède au cours du temps à des prélèvements. Ceci permet de calculer la conversion en polymère obtenue après évaporation sous vide (25 mbar, 140°C, 20 min) du monomère restant dans un échantillon.

Les résultats sont rapportés dans le Tableau 1.

Tableau 1

| t (min) | Conversion (%) | $\overline{Mn}$ (g/mole) | $\overline{Mw}/\overline{Mn}$ | ln (1/(1-Conversion) |
|---|---|---|---|---|
| 0 | 0 | 0 | - | 0,00 |
| 30 | 10,5 | 3485 | 1,2 | 0,11 |
| 70 | 17,4 | 5960 | 1,3 | 0,19 |
| 100 | 21,4 | 7219 | 1,3 | 0,24 |
| 180 | 33,1 | 11940 | 1,4 | 0,40 |
| 235 | 42,0 | 15880 | 1,3 | 0,54 |
| 280 | 48,4 | 16750 | 1,4 | 0,66 |
| 310 | 52,1 | 18830 | 1,4 | 0,74 |
| 340 | 56,5 | 21560 | 1,3 | 0,83 |
| 370 | 60,4 | 22480 | 1,4 | 0,93 |

| | |
|---|---|
| Conversion | 60,4% |
| $\overline{Mn}_{exp}$ | 22480 g/mole (étalon de PMMA) |
| $\overline{Mn}_{théo}$ | 24160 g/mole |
| $\overline{Mw}/\overline{Mn}$ | 1,4 |

L'évolution linéaire des masses moyennes $\overline{Mn}_{exp}$ en fonction de la conversion ainsi que de ln (1/(1-Conversion)) en fonction du temps montre que le système est vivant.

Exemple 5

Polymérisation du MMA

On procède comme dans l'Exemple 4, avec 300,0 g de MMA, 1,50 g de bromotrichlorométhane (7,5 x $10^{-3}$ mole), mais avec 2,81 g de $NiBr_2(PPh_3)_2$(3,8 x $10^{-3}$ mole). Les résultats sont présentés dans le Tableau 2.

Tableau 2

| t (min) | Conversion (%) | $\overline{Mn}_{exp}$ (g/mole) | $\overline{Mw}/\overline{Mn}$ | ln (1/(1-Conversion) |
|---|---|---|---|---|
| 0 | 0 | 0 | - | 0,0 |
| 60 | 6,6 | - | - | 0,07 |
| 120 | 11,2 | 4 336 | 1,2 | 0,12 |
| 180 | 17,0 | - | - | 0,19 |
| 300 | 25,5 | 9 773 | 1,2 | 0,29 |
| 400 | 34,8 | 12 710 | 1,3 | 0,43 |
| 500 | 40,4 | 13 760 | 1,5 | 0,52 |

| | |
|---|---|
| Conversion | 40,4% |
| $\overline{Mn}_{exp}$ | 13760 g/mole (étalon de PMMA) |
| $\overline{Mn}_{théo}$ | 16160 g/mole |
| $\overline{Mw}/\overline{Mn}$ | 1,5 |

On constate à nouveau une évolution linéaire des masses moyennes $\overline{Mn}_{exp}$ en fonction de la conversion et de ln (1/(1-Conversion)) en fonction du temps.

Exemple 6 (comparatif)

Dans le réacteur de 2 litres, on amorce la polymérisation du MMA (300,0 g) en masse à l'aide de l'AIBN (0,616 g, 3,7 x $10^{-3}$ mole) et à 70°C.

Les résultats sont présentés dans le Tableau 3.

Tableau 3

| t (min) | Conversion (%) | $\overline{Mn}_{exp}$ (g/mole) | $\overline{Mw}/\overline{Mn}$ | ln (1/(1-X) |
|---|---|---|---|---|
| 0 | 0 | 0 | - | 0,00 |
| 15 | 8,7 | 48 240 | 4,6 | 0,09 |
| 30 | 34,5 | 50 370 | 3,8 | 0,42 |
| 35 | 42,0 | 67 120 | 3,2 | 0,54 |
| exothermie jusqu'à 110°C | | | | |
| 40 | 100,0 | 65 970 | 2,8 | |

| | |
|---|---|
| Conversion | 100% |
| $\overline{Mn}_{exp}$ | 65970 g/mole (étalon de PMMA) |
| $\overline{Mn}_{théo}$ | 40000 g/mole |
| $\overline{Mw}/\overline{Mn}$ | 2,8 |

La polymérisation s'autoaccélère rapidement. Elle n'est pas vivante comme le montre la courbe que l'on peut

tracer : ln (1/(1-X) en fonction du temps, ou encore la courbe que l'on peut tracer : $\overline{Mn}_{exp}$ en fonction de la conversion, lesquelles courbes ne sont pas linéaires.

Exemple 7

Détermination des températures de transition vitreuse (Tg) de plusieurs échantillons de PMMA

| Echantillon | Tg (°C) |
|---|---|
| PMMA obtenu par amorçage radicalaire classique | 114,8 |
| PMMA obtenu par amorçage anionique | 124,3 |
| PMMA de l'Exemple 4 | 123,7 |
| PMMA de l'Exemple Comparatif 6 | 111,1 |

La température de transition vitreuse Tg (déterminée à l'aide d'une technique Differentiel Scan Calorimetry avec une vitesse de montée de température de 10°C) des échantillons obtenus par voie radicalaire contrôlée est plus élevée que celle d'échantillons préparés par voie radicalaire classique.

Exemple 8

Synthèse d'un PMMA porteur d'une fonction alcool en bout de chaîne

Dans un tube en verre, on introduit 0,0173 g de $NiBr_2(PPh_3)_2$ (0,023 millimole) et 0,013 g de 2,2,2-tribromoéthanol (0,047 millimole). On ferme le tube avec un robinet à trois voies. On élimine l'oxygène par la répétition d'un cycle vide-azote. A l'aide d'une seringue flambée, on introduit dans le tube 1,5 ml de toluène (dégazé par bullage d'azote), ainsi que 3 ml de MMA (28,05 millimoles). Le tube est alors placé dans un bain thermostatisé à 75°C. Après 47 heures de réaction, le tube est ouvert et le milieu réactionnel dissous dans du THF, avant d'être précipité dans de l'heptane.

| | |
|---|---|
| Conversion | 52% |
| $\overline{Mn}_{exp}$ | 37 200 g/mole (étalon de PMMA) |
| $\overline{Mn}_{théo}$ | 31 500 g/mole |
| $\overline{Mw}/\overline{Mn}$ | 1,34 |

Exemple 9

Synthèse d'un PMMA porteur d'une fonction acide carboxylique en bout de chaîne

On procède comme pour l'Exemple 8, mais avec :

- 0,52 g (0,07 mmole) de $NiBr_2(PPh_3)_2$ ;
- 0,53 g (0,14 mmole) d'acide 2-bromo-propionique ;
- 0,5 ml de toluène ; et
- 3 ml (28 mmoles) de MMA.

La polymérisation est arrêtée au bout de 16 heures.

| | |
|---|---|
| Conversion | 93% |
| $\overline{Mn}_{exp}$ | 26 900 g/mole (étalon de PMMA) |
| $\overline{Mn}_{théo}$ | 18 900 g/mole |
| $\overline{Mw}/\overline{Mn}$ | 1,23 |

Exemple 10

Synthèse d'un poly(acrylate de n-butyle) (PnBuA) porteur d'un atome de brome à ses deux extrémités

On procède comme pour l'Exemple 8, mais à une température de 85°C avec :

- 0,664 g (0,089 mmole) de $NiBr_2(PPh_3)_2$ ;
- 0,0322 g (0,089 mmole) de méso-2,5-dibromoadipate de diéthyle :

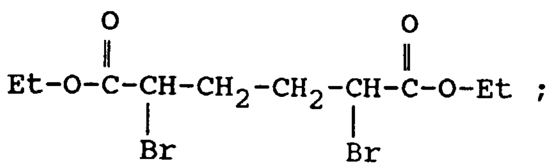

- 12 ml (83,7 mmoles) d'acrylate de n-butyle.

La polymérisation est arrêtée au bout de 20 heures. Le polymère n'est pas précipité, mais le monomère résiduel est éliminé par évaporation sous haut vide.

| | |
|---|---|
| Conversion | 72% |
| $\overline{Mn}_{exp}$ | 86 600 g/mole (étalon de PMMA) |
| $\overline{Mn}_{théo}$ | 86 000 g/mole |
| $\overline{Mw}/\overline{Mn}$ | 1,09 |

Exemple 11

Reprise de polymérisation de MMA à partir d'un PMMA précipité

On procède comme pour l'Exemple 8, mais avec :

- 0,03 g (0,04 mmole) de $NiBr_2(PPh_3)_2$ ;
- 0,2 g d'un PMMA synthétisé avec $NiBr_2(PPh_3)_2$ et du 2-bromo-2-méthyl-propionate d'éthyle ($Br-C(CH_3)_2-CO-O-CH_2CH_3$), et ayant une $\overline{Mn}_{exp}$ de 4770 et une polydispersité $\overline{Mw}/\overline{Mn}$ de 1,27 ; et
- 1,5 ml (14 mmoles) de MMA.

La polymérisation est arrêtée au bout de 16 heures.

| | |
|---|---|
| Conversion | 71% |
| $\overline{Mn}_{exp}$ | 37 000 g/mole (étalon de PMMA) |
| $\overline{Mn}_{théo}$ | 28 700 g/mole |
| $\overline{Mw}/\overline{Mn}$ | 1,15 |

Exemple 12

Reprise de polymérisation de n-BuA à partir d'un PMMA précipité

On procède comme pour l'Exemple 8, mais à une température de 120°C, avec :

- 0,03 g (0,04 mmole) de $NiBr_2(PPh_3)_2$ ;
- 0,2 g d'un PMMA synthétisé avec $NiBr_2(PPh_3)_2$ et du 2-bromo-2-méthyl-propionate d'éthyle et ayant une $\overline{Mn}_{exp}$ de 4770 et une polydispersité $\overline{Mw}/\overline{Mn}$ de 1,27 ; et
- 2 ml (14 mmoles) d'acrylate de n-butyle.

La polymérisation est arrêtée au bout de 16 heures.

| | |
|---|---|
| Conversion | 80% |
| $\overline{Mn}_{exp}$ | 30 000 g/mole (étalon de PMMA) |
| $\overline{Mn}_{théo}$ | 42 500 g/mole |
| $\overline{Mw}/\overline{Mn}$ | 2,17 |

Exemple 13

Synthèse d'une polycaprolactone fonctionnalisée par un groupement tribromoéthoxy et utilisation de cette polycaprolactone comme macroamorceur du MMA (formation d'un copolymère à blocs poly(ε-caprolactone)-b-PMMA)

(a) Synthèse de la polycaprolactone

Le 2,2,2-tribromoéthanol est séché à l'aide de deux azéotropes au toluène sous atmosphère inerte d'azote. On fait réagir 2,262 g (8 mmoles) de 2,2,2-tribromoéthanol sec avec 2 mmoles d'Al(OiPr)3 dans du toluène. On effectue deux azéotropes au toluène afin d'éliminer l'alcool isopropylique. Dans 30 ml de toluène, on introduit 5 grammes de caprolactone (43,8 mmoles) ainsi que 1,8 mmole de l'amorceur préalablement synthétisé. On laisse réagir à 25°C pendant 1 heure.

| | |
|---|---|
| Conversion | 86%, déterminée après précipitation du polymère dans l'heptane |
| $\overline{Mn}$ | 2 500 g/mole |
| $\overline{Mw}/\overline{Mn}$ | 1,1 |

(b) Utilisation de ce macroamorceur dans la polymérisation du MMA

On procède comme pour l'Exemple 8, mais avec :

- 0,045 g (0,06 mmole) de $NiBr_2(PPh_3)_2$ ;
- 0,15 g de la poly(ε-caprolactone) obtenue en (a) ;
- 0,3 ml de THF ; et
- 1,2 ml (11,2 mmoles) de MMA.

La polymérisation est arrêtée au bout de 15 heures.

| | |
|---|---|
| Conversion | > 95% |
| $\overline{Mn}_{exp}$ | 25 000 g/mole (étalon de PMMA) |
| $\overline{Mn}_{théo}$ | 21 000 g/mole |
| $\overline{Mw}/\overline{Mn}$ | 1,2 |

Exemple 14

Synthèse d'un PMMA contrôlé avec un rapport catalyseur/amorceur de 0,05

On procède comme pour l'Exemple 8, mais avec :

- 0,01 g (0,013 mmole) de $NiBr_2(PPh_3)_2$ ;
- 5 ml (47 mmoles) de MMA ; et
- 1,3 ml d'une solution de 2-bromo-2-méthyl-propionate d'éthyle 0,2018 M dans le toluène (0,26 mmole).

La polymérisation est arrêtée au bout de 120 heures.

| | |
|---|---|
| Conversion | 80% |

(suite)

| | |
|---|---|
| $\overline{Mn}_{exp}$ | 30 700 g/mole (étalon de PMMA) |
| $\overline{Mn}_{théo}$ | 14 500 g/mole |
| $\overline{Mw}/\overline{Mn}$ | 1,46 |

Exemple 15

Formation d'un copolymère triséquencé PMMA-b-P(nBuA)-b-PMMA

On procède comme pour l'Exemple 8, mais à une température de 85°C, avec :

- 0,27 g (0,36 mmole) de $NiBr_2(PPh_3)_2$ ;
- 19,34 g d'un PnBuA difonctionnel synthétisé comme à l'Exemple 10 ($\overline{Mn}_{exp}$ = 107 000 g/mole (étalon de PMMA); $\overline{Mw}/\overline{Mn}$ = 1,11);
- 80 ml de toluène ; et
- 10 ml (93,5 mmoles) de MMA.

La polymérisation est arrêtée au bout de 51 heures.

| | |
|---|---|
| Conversion | 45% |
| $\overline{Mn}_{exp}$ | 110 000 g/mole (étalon de PMMA) |
| $\overline{Mw}/\overline{Mn}$ | 1,33 |
| % de MMA déterminé par RMN $^1H$ | 24% |

**Revendications**

**1.** Procédé de polymérisation ou copolymérisation radicalaire contrôlée de monomères (méth)acryliques et/ou vinyliques, caractérisé par le fait que l'on polymérise ou copolymérise en masse, solution, émulsion ou suspension, à une température pouvant descendre jusqu'à 0°C, au moins un desdits monomères en présence d'un système d'amorçage comprenant :

- au moins un composé générateur de radicaux autre qu'un chlorure d'arène sulfonyle ; et
- au moins un catalyseur constitué par un complexe de métal représenté par la formule suivante (I) :

$$MA_a(L)_n \quad (I)$$

dans laquelle :
- M représente Ni, Pd ou Pt ;
- A représente un halogène ou un pseudo-halogénure ;
- les L sont des ligands du métal M, choisis indépendamment parmi ceux contenant au moins l'un parmi N, P, As, Sb, Bi, au moins deux de ces ligands pouvant être reliés entre eux par un ou plusieurs radicaux bivalents ;
- a est un entier de 1 à 5 ;
- n est un entier de 1 à 4 ;

avec $4 \leq a + n \leq 6$, a + n représentant le nombre de coordination du complexe.

**2.** Procédé selon la revendication 1, caractérisé par le fait que M représente Ni.

**3.** Procédé selon l'une des revendications 1 et 2, caractérisé par le fait que A représente un halogène choisi parmi Cl, Br, F et I, ou un pseudo-halogénure choisi parmi CN, NCS, $NO_2$ et $N_3$.

**4.** Procédé selon l'une des revendications 1 à 3, caractérisé par le fait que a + n est égal à 4.

**5.** Procédé selon l'une des revendications 1 à 4, caractérisé par le fait que les ligands L sont choisis indépendamment parmi les phosphines, les arsines, les stibines, les phosphites, les ligands azotés et les ligands mixtes comportant à la fois du phosphore et de l'arsenic, du phosphore et de l'azote, tous ces ligands pouvant comporter au moins un hétéroélément tel que O et S.

**6.** Procédé selon l'une des revendications 1 à 5, caractérisé par le fait que le complexe de formule (I) porte une charge cationique.

**7.** Procédé selon l'une des revendications 1 à 5, caractérisé par le fait que le complexe de formule (I) est le complexe $NiX_2(PPh_3)_2$, X représentant un halogène.

**8.** Procédé selon l'une des revendications 1 à 7, caractérisé par le fait que le composé générateur de radicaux libres est monofonctionnel et choisi dans les classes des composés suivants :

(a) les dérivés de formule :

$$CYZ_3$$

où :

- Y = Cl, Br, I, F, H ou $-CR^1R^2OH$, $R^1$ et $R^2$ représentant chacun indépendamment hydrogène ou alkyle en $C_1$-$C_{14}$ ; et
- Z = Cl ou Br ;

(b) les dérivés de formule :

$$R^3CCl_3$$

où $R^3$ représente phényle ; benzyle ; benzoyle ; alcoxycarbonyle ; $R^4CO$ avec $R^4$ représentant alkyle en $C_1$-$C_{14}$ ou aryle ; alkyle ; mésityle ; trifluorométhyle; ou nitro ;

(c) les dérivés de formule :

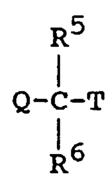

dans laquelle :

- Q représente un atome de chlore ou de brome ou un groupe acétate ou trifluoroacétate ou triflate ;
- $R^5$ représente un atome d'hydrogène, un groupe alkyle en $C_1$-$C_{14}$ ou un groupe aromatique, ou un groupe $-CH_2OH$ ;
- T représente un groupe

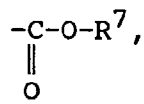

avec $R^7$ représentant hydrogène ou un groupe alkyle ou aromatique; un groupe CN ; un groupe

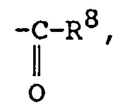

avec $R^8$ représentant alkyle en $C_1$-$C_{14}$, phényle ou isocyanate ; un groupe hydroxyle ; un groupe nitro ; un groupe amino substitué ou non ; un groupe alcoxy en $C_1$-$C_{14}$ ; un groupe $R^9CO$, avec $R^9$ représentant alkyle en $C_1$-$C_{14}$ ou aryle ;

- $R^6$ représente un groupe entrant dans les définitions de $R^5$ ou de Q ou un groupe fonctionnel tel qu'hydroxyle, nitro, amino substitué ou non, alcoxy en $C_1$-$C_{14}$, acyle, acide carboxylique, ester ;

(d) les composés lactones ou lactames halogénés en $\alpha$ ;

(e) les N-halosuccinimides et les N-halophtalimides ;

(f) les halogénures d'alkyl-sulfonyle ;

(g) les composés de formule :

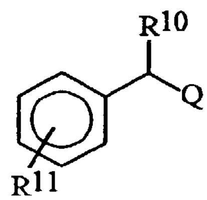

où :

- $R^{10}$ représente un atome d'hydrogène, un groupe alkyle en $C_1$-$C_{14}$ ou un groupe acide carboxylique, ester, nitrile ou cétone ;
- $R^{11}$ représente un atome d'hydrogène ou un groupe alkyle en $C_1$-$C_{14}$, hydroxyle, acyle, amine substituée ou non, nitro, alcoxy en $C_1$-$C_{14}$ ou sulfonate ; et
- Q a la signification donnée précédemment ;

(h) les composés de formule :

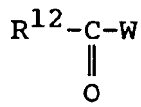

où :

- $R^{12}$ représente alkyle en $C_1$-$C_{14}$ ou aryle ;
- W représente un halogène ou pseudohalogénure ;

(i) les composés de formule :

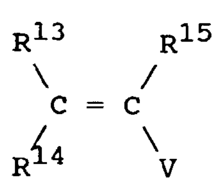

où :

- $R^{13}$, $R^{14}$ et $R^{15}$ représentent chacun indépendamment alkyle en $C_1$-$C_{14}$ ou aryle ; et
- V représente halogène, acétate, trifluoroacétate, triflate ;

(j) les halogénures aromatiques de formule :

Ar - U

où :

- Ar représente un groupement aromatique, tel que $C_6H_5$- pouvant être substitué en position ortho, méta ou para par un groupement électroattracteur ou électrodonneur ; et
- U représente un halogène.

**9.** Procédé selon la revendication 8, caractérisé par le fait que le composé générateur de radicaux est choisi parmi le bromotrichlorométhane, le 2,2,2-tribromoéthanol, l'acide 2-bromopropionique, le méso-2,5-dibromoadipate de diéthyle et le 2-bromo 2-méthyl propionate d'éthyle.

**10.** Procédé selon l'une des revendications 1 à 7, caractérisé par le fait que le composé générateur de radicaux est multifonctionnel et est constitué par au moins deux groupements générateurs de radicaux monofonctionnels issus des classes (c) à (j) définies à la revendication 6, reliés par une chaîne d'unités méthylène ou par un cycle benzénique ou par une combinaison des deux, ou est choisi parmi les anhydrides acétiques comme l'anhydride d'acide chloroacétique et l'anhydride d'acide chlorodifluoroacétique, et les tri- ou tétrahalométhanes et les dérivés trichlorométhylés des classes (a) et (b) définies à la revendication 8.

**11.** Procédé selon la revendication 10, caractérisé par le fait que le composé générateur de radicaux est bifonctionnel et est choisi parmi ceux de formule :

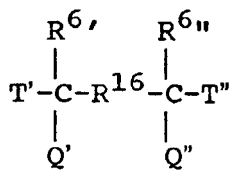

dans laquelle :

- T' et T" représentent chacun indépendamment un groupe entrant dans la définition de T telle qu'indiquée à la revendication 8 ;
- Q' et Q" représentent chacun indépendamment un groupe entrant dans la défintion de Q telle qu'indiquée à la revendication 8 ;
- $R^{6'}$ et $R^{6''}$ représentent chacun indépendamment un groupe entrant dans la défintion de $R^6$ telle qu'indiquée à la revendication 8 ; et
- $R^{16}$ représente un groupe $-(CH_2)_p-$,

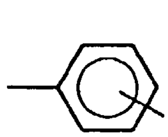 ,

ou

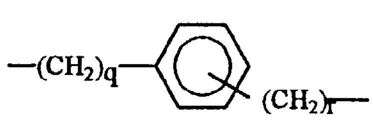

où p, q et r représentent chacun un entier de 1 à 14.

**12.** Procédé selon l'une des revendications 1 à 7, caractérisé par le fait que le composé générateur de radicaux est une polylactone, telle qu'une polycaprolactone, porteuse d'un atome d'halogène à l'une des extrémités de chaîne, ayant été obtenue par polymérisation par ouverture de cycle avec un alcoolate halogéné ou un carboxylate halogéné.

**13.** Procédé selon l'une quelconque des revendications 1 à 12, caractérisé par le fait que le rapport molaire du ou des monomères sur le ou les composés générateurs de radicaux est de 1 - 100 000.

**14.** Procédé selon l'une des revendications 1 à 13, caractérisé par le fait que le rapport molaire du métal M sur le (ou les) générateur(s) de radicaux est de 0,01 à 100.

**15.** Procédé selon l'une quelconque des revendications 1 à 14, caractérisé par le fait que la polymérisation ou copolymérisation est effectuée à une température de 0°C à 130°C.

**16.** Procédé selon l'une quelconque des revendications 1 à 15, caractérisé par le fait que les monomères polymérisables ou copolymérisables comprennent au moins un monomère choisi parmi les méthacrylates, les acrylates, les dérivés vinylaromatiques, l'acétate de vinyle et le chlorure de vinyle.

**17.** Procédé selon la revendication 16, caractérisé par le fait que le monomère est choisi dans le groupe comprenant le méthacrylate de méthyle, le méthacrylate d'éthyle, le méthacrylate de n-butyle, l'acrylonitrile et le styrène.

**18.** Procédé selon l'une des revendications 1 à 17, caractérisé par le fait qu'on conduit une copolymérisation séquencée en introduisant, dans le milieu de polymérisation dans lequel le premier monomère a été polymérisé, un second monomère le cas échéant avec un nouvel ajout de système d'amorçage.

**19.** Polymères ou copolymères obtenus selon l'une quelconque des revendications 1 à 18, caractérisés par le fait qu'ils ont une masse moléculaire $\overline{Mn}$ entre 400 et 10 000 000 g/mole et une polymolécularité $\overline{Mw}/\overline{Mn}$ inférieure à 2.

Office européen des brevets

# RAPPORT DE RECHERCHE EUROPEENNE

Numéro de la demande
EP 97 40 1440

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 265 091 A (E.I. DU PONT DE NEMOURS AND CO.) |  | C08F4/00 |
| D,A | KEITH HARGREAVES: "THE INITIATION OF VINYL POLYMERIZATION BY TETRAKIS(TRIALKYL-PHOSPHITE) NICKEL (0) DERIVATIVES"<br>JOURNAL OF POLYMER SCIENCE PART A POLYMER CHEMISTRY,<br>vol. 26, no. 2, février 1988,<br>pages 465-476, XP002028796 |  |  |
| A | US 4 145 486 A (W.O.HAAG) |  |  |

DOMAINES TECHNIQUES RECHERCHES (Int.Cl.6)

C08F

Le présent rapport a été établi pour toutes les revendications

| Lieu de la recherche | Date d'achèvement de la recherche | Examinateur |
|---|---|---|
| LA HAYE | 13 novembre 1997 | Cauwenberg, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)